# EUROPÄISCHE PATENTSCHRIFT

(11) **EP 3 137 700 B1**
(45) Veröffentlichungstag und Bekanntmachung des Hinweises auf die Patenterteilung: **22.04.2020**
(21) Anmeldenummer: 15725869.0
(22) Anmeldetag: 28.04.2015
(51) Int. Cl.: E04G 11/38, E04G 11/48, E04G 25/04, E04B 9/36, E04B 5/48

(54) **VERFAHREN ZUR HERSTELLUNG EINER DECKE IN EINEM GEBÄUDE**
METHOD FOR PRODUCING A CEILING IN A BUILDING
PROCÉDÉ DE FABRICATION D'UN PLAFOND DANS UN BÂTIMENT

(30) Priorität: 28.04.2014 DE 102014005992
(43) Veröffentlichungstag der Anmeldung: 08.03.2017
(73) Patentinhaber: Franck, Jan, 95466 Weidenberg (DE)
(72) Erfinder: Franck, Jan, 95466 Weidenberg (DE)
(74) Vertreter: Küchler, Stefan
(86) Internationale Anmeldenummer: PCT/IB2015/000593
(87) Internationale Veröffentlichungsnummer: WO 2015/166331

(56) Entgegenhaltungen:
- DE-C1- 802 352
- GB-A- 610 826
- US-A- 3 389 521

## Beschreibung

Die Erfindung richtet sich auf ein Verfahren zur Herstellung einer Decke in einem Gebäude.

Üblicherweise werden beim Bau einer Decke in einem Gebäude zunächst tragende Horizontalbalken verlegt; diese werden dann an ihrer Ober- und Unterseite verkleidet, was sehr arbeitsaufwändig ist.

Weiterhin gibt es die Möglichkeit, fertige Betonplatten zu verwenden und diese auf die bereits existierenden Mauern aufzulegen. Deren Unterseite sieht jedoch im Allgemeinen nicht sehr wohnlich aus und muss daher ebenfalls verkleidet werden.

Darunter leidet auch eine weitere Bauvariante, wobei zunächst dünnere Betonplatten auf den Mauer-Oberkanten verlegt werden und sodann an ihrer Oberseite mit Ortbeton aufgefüllt werden. Auch hier sind an den Unterseiten die angefasten Kanten der Betonplatten deutlich sichtbar und diese müssen daher entweder verkleidet oder verfugt werden.

Dokumente US 3 389 521 A, GB 610 826 A und DE 802 352 C1 offenbaren ein Verfahren zur Herstellung einer Decke in einem Gebäude.

Aus den Nachteilen des beschriebenen Standes der Technik resultiert das die Erfindung initiierende Problem, einen Deckenaufbau eines Gebäudes derart weiterzubilden, dass dieser mit geringstem Aufwand hergestellt werden kann und dennoch höchsten ästhetischen Ansprüchen genügt.

Die Lösung dieses Problems gelingt durch ein Verfahren zur Herstellung einer Decke in einem Gebäude, mit folgenden Schritten:
a) ein plattenförmiges Deckenelement, beispielsweise eine Trockenbauplatte, wird an den bereits fertiggestellten Wänden aufgelegt und/oder fixiert;
b) das plattenförmige Deckenelement wird in engen Abständen abgestützt, ggf. mittels abgestützter Horizontalbalken;
c) auf dem plattenförmigen Deckenelement wird ggf. eine Dämmung verlegt und/oder Heizschlangen und/oder eine Elektroinstallation;
d) darauf wird eine aushärtbare Masse eingefüllt, beispioelsweise Beton oder Spannbeton und/oder Estrich oder Heizestrich od. dgl.;
e) wobei das plattenförmige Deckenelement von einer Vielzahl von langgestreckten Verankerungsteilen durchdrungen wird, welche sich von dem Deckenelement nach oben erstrecken bis in die aushärtbare Masse hinein und nach dem Verfestigen der aushärtbaren Masse darin formschlüssig festgehalten werden;
f) wobei die langgestreckten Verankerungsteile die Gestalt von Schrauben haben, deren freie Schaftenden während der Montage nach oben ragen;
g) nach Aushärten der aushärtbaren Masse zu einer tragenden Schicht werden die Stützelemente entfernt, während die langgestreckten Verankerungsteile im Bauwerk verbleiben und das plattenförmige Deckenelement an Ort und Stelle halten.

Indem dieser Deckenaufbau konsequent von unten nach oben gebaut wird, lässt er sich in einer einzigen, chronologischen Abfolge von Arbeitsschritten fertigstellen. Dabei kann die zuunterst begonnene Deckenverkleidung an der Unterseite verbleiben, wenn sie ausreichend in der aushärtenden Masse verankert oder mit jener verbunden ist. Dies kann z. B. dadurch geschehen, dass in der Deckenverkleidung nach oben ragende Schrauben eingesetzt werden.

Sodann wird auf dieser Verkleidung ggf. eine Isolation und/oder die jeweils benötigte Installation verlegt, beispielsweise Elektrokabel, Leuchten, ggf. Heizschlangen od. dgl.

Darauf folgt dann die eigentlich tragende Schicht, insbesondere durch Aufgabe einer flüssigen Masse aus Beton od. dgl.

Darauf kann ein getrennter Estrich aufgeschichtet werden, ggf. nach einer Isolationsschicht dazwischen. Unter betimmten Umständen kann auf eine solche Doppellage aus Beton und Estrich verzichtet werden, bspw. wenn eine Isolationsschicht zwischen der Unterseite der aushärtenden Masse und der unterseitigen Verkleidung eingelegt wird, insbesondere in Form einer XPS-Dämmung oder einer vergleichbar stabilen Dämmung.

Es hat sich als günstig erwiesen, dass das plattenförmige Deckenelement derart justiert wird, dass seine Oberseite oder die Oberseite der obersten darauf liegenden Dämmung, Heizschlangen und/oder Elektroinstallation, in einer gemeinsamen Flucht bzw. Horizontalebene mit den Oberseiten der angrenzenden Wände ist. Demzufolge kann sich eine durch eine darauf applizierte, aushärtende Masse gebildete tragende Platte unmittelbar auf den Oberkanten der umgebenden Wände abstützen, wenn diese entsprechend groß dimensioniert ist, d.h. derart, dass die Grundfläche der tragenden Platte größer ist als die Grundfläche des überspannten Raums. Für das plattenförmige Deckenelement hat sich die Verwendung von Holz bewährt, beispielsweise in Form einer Holzplatte, einer Sperrholzplatte, einer Spanplatte, einer Leimholzplatte, einer mitteldichten Faserplatte oder einer Grobspanplatte, vorzugsweise jedoch aus einer mittelharten Faserplatte oder einer Hartfaserplatte. Solche Platten können einerseits eine darauf lastende, aushärtende Masse sicher abstützen, bis diese zu einer Platte ausgehärtet ist; darüber hinaus bildet sie im fertigen Zustand der Decke eine bearbeitbare Unterseite, welche die Montage weiterer Elemente wie beispielsweisee Gardinenleisten erleichtert, wozu dann im Gegensatz zu einer Betondecke keine Dübel erforderlich sind.

Die Erfindung empfiehlt, dass das plattenförmige Deckenelement von einer Vielzahl von langgestreckten Verankerungsteilen durchdrungen wird, welche sich von dem Deckenelement nach oben erstrecken bis in die aushärtbare Masse hinein. Diesen Verankerungsteilen obliegt es, nach Fertigstellen der Decke und Entfernen der unterseitigen Stützelemente das plattenförmige Deckelement nach wie vor an Ort und Stelle zu halten.

Die Erfindung lässt sich dahingehend weiterbilden, dass die Verankerungsteile eine derartige Gestalt haben, dass sie nach dem Verfestigen der aushärtbaren Masse darin formschlüssig festgehalten werden, insbesondere gegenüber vertikalen Zugbeanspruchungen. Indem sie von einer Masse umflossen werden, die unter radial auskragende Bereiche eines Verankerungsteils wie ein Gewinde greift, egibt sich ein unmittelbarer Formschluss.

Weitere Vorteile ergeben sich dadurch, dass die Verankerungsteile nach dem Verfestigen der aushärtbaren Masse darin lösbar festgehalten werden, in Gestalt von Schrauben, welche durch Drehbewegungen aus der zu einer tragenden Schicht verfestigten Masse herausgeschraubt werden können. Der Vorteil ist, dass die Schrauben solchenfalls bei Bedarf gelöst werden können, so dass das plattenförmige Deckenelement abgenommen werden kann, beispielsweise um dieses auszutauschen oder um Zugang zu dahinter verborgenen Installationselementen wie beispielsweise einer Deckenheizung zu erhalten.

Die Verankerungsteile können eine Beschichtung aufweisen, welche ein Festkleben an der ausgehärteten Masse verhindert, beispielsweise ein dünn aufgetragenes Öl. Solchenfalls formt sich eine Schraube zwar in der aushärtenden Masse ihr Futter selbst, klebt aber daran nicht fest, sondern kann nachträglich herausgeschraubt werden. Das Gewinde verbleibt in der tragenden Platte und kann jederzeit zum abermaligen Festschrauben der Schraube verwendet werden.

Die Erfindung empfiehlt, die aushärtbare Masse zu armieren, insbesondere durch eingelegte Eisen- oder Stahlmatten oder -käfige, so dass die Tragkraft einer fertig ausgehärteten, tragenden Platte weiter gesteigert ist.

Indem die aushärtbare Masse auch auf die Oberseiten der benachbarten Wände aufgetragen wird, liegt die nach deren Erhärten entstandene tragende Platte auf den Wänden auf, so dass auflastende Gewichtskräfte unmittelbar in die angrenzenden Wände eingeleitet werden.

Nach Erhärten der tragenden Schicht können die unterseitigen Stützen entfernt werden, und die Decke ist fertig. Die unterseitigen Verkleidungsplatten halten dank ihrer nach oben ragenden, in den Beton unmittelbar eingeschlossenen Schrauben an der Decke extrem fest, können aber durch herausdrehen der Schrauben jederzeit abgenommen werden. Falls noch nicht zuvor geschehen, kann nach dem Entfernen der Stützelemente durch Verankerung in dem plattenförmigen Deckenelement eine Deckenverkleidung montiert werden kann, beispielsweise eine Holzdecke aus Profilbrettern.

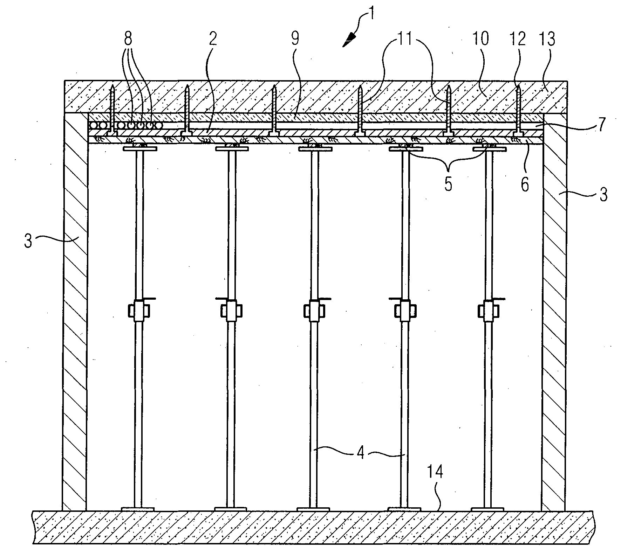

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Deren einzige Figur zeigt einen Vertikalschnitt durch eine erfindungsgemäße Deckenkonstruktion während deren Herstellung.

Eine erfindungsgemäße Decke 1 wird mittels eines plattenförmigen Deckenelements 2 auf bereits existierenden Wänden 3 errichtet, welche nach Fertigstellung des Bauwerks die Decke 1 tragen.

Als plattenförmiges Deckenelement 2 besonders bewährt haben sich Platten aus Holz, beispielsweise Sperrholzplatten wie Furniersperrholzplatten, Stab- oder Stäbchensperrholzplatten oder Brettsperrholzplatten, auch Kreuzlagenholzplatten genannt; ferner Spanplatten, insbesondere Grobspanplatten; sowie Faserplatten, beispielsweise Hartfaserplatten oder mitteldichte Faserplatten. All diesen Platten ist gemeinsam, dass das Holz nicht aus einer einzigen, unbearbeiteten Rohholzschicht besteht, sondern infolge einer Kombination vieler kleiner Holzelemente mit verschiedenen Faserrichtungen und/oder infolge eines die einzelnen Bestandteile miteinander verbindenden Bindemittels möglichst vollkommen omnidirektionale Eigenschaften erhält und daher kaum mehr arbeitet. Darüber hinaus haben derartige Platten eine vergleichsweise hohe mechanische Stabilität bei gleichzeitig vernünftigem Preis.

Das plattenförmige Deckenelement 2 sollte nach möglichkeit das betreffende Zimmer zumindest in einer Raumrichtung vollkommen überspannen. Für den Zeitraum der Deckenmontage kann es an den Wänden 3 fixiert werden, beispielsweise mittels Metallwinkeln, die sich möglichst von dem plattenförmigen Deckenelement 2 nach oben erstrecken und daher von unten nicht sichtbar sind.

Die genaue Höhe des Deckenelements 2 richtet sich einerseits nach der gewünschten Raumhöhe, andererseits aber auch nach dem gewünschten Deckenaufbau und nicht zuletzt nach der Höhe der Wände 3. Darunter soll weiter unten detaillierter eingegangen werden.

Um während der Deckenmontage das Gewicht der einzelnen, noch nicht zusammengefügten Bauteile abzustützen, werden eine Reihe von Bau-Stützelemente 4 zwischen den Wänden 3 aufgestellt. Auf diesen ruhen horizontal verlaufende Balken 5, und darauf kann wahlweise das plattenförmige Deckenelemennt 2 aufgelegt werden und/oder weitere Verkleidungsplatten 6, beispielsweise Trockenbauplatten wie Gipskartonplatten od. dgl., welche mit dem plattenförmigen Deckenelement verbunden sind oder werden. Natürlich kann eine Montage von Verkleidungsplatten 6 auch entbehrlich sein, beispielsweise wenn das plattenförmige Deckenelement 2 nur tapeziert werden soll, oder kann auch erst nach Fertigstellung der erfindungsgemäßen Decke 1 vorgenommen werden.

Darauf kann oben eine Schicht 7 aus einer festen Isolation verlegt werden, bspw. eine Wärmedämmung wie XPS. In dieser Schicht 7 oder darauf können Installationen vorgenommen werden, beispielsweise Elektrokabel verlegt werden oder Deckenleuchten integriert werden. Auf dieser Isolationsschicht 7 können ggf. Heizrohre 8 verlegt werden, beispielsweise für eine Deckenheizung. Im Fall einer Deckenheizung können Heizrohre oder -schlangen 8 durch eine weitere Dämmschicht 9 abgedeckt weden.

Sodann wird die eigentliche, tragende Schicht 10 hergestellt.

Die Verbindung der plattenförmigen Deckenelemente 2 mit der tragenden Schicht 10 erfolgt mittels langgestreckter Verankerungsteile, in Form von Schrauben 11, insbesondere Holzschrauben, deren Köpfe je ein plattenförmiges Deckenelement 2 an dessen unten liegender Seite umgreifen oder in dortigen Einsenkungen aufgenommen sind. Die freien Schaftenden 12 dieser Schrauben 11 zeigen dabei während der Montage nach oben, wie dies in der Zeichnung erkennbar ist.

Um ein Festkleben der aushärtenden Tragschicht mit den langgestreckten Verankerungsteilen bzw. Schrauben 11 zu vermeiden, können diese mit einer Antihaftschicht versehen sein, beispielsweise dünn mit einem Öl eingesprüht sein.

Vor dem Aufbringen der eigentlichen Tragschicht 10 können in einem nächsten Arbeitsschritt Armierungseisen od. sonstiges Armierungsmaterial auf den bereits fertiggestellten Decken-Unterbau aufgelegt werden, ggf. mittels Abstandhaltern, damit die Armierungseisen vollständig umflossen werden und nicht rosten können.

Als nächstes wird flüssiger Beton oder eine andere aushärtbare Masse 13 auf die bis dahin fertiggestellte Decken-Unterkonstruktion aufgegossen und ggf. gerüttelt bzw. verdichtet und/oder geglättet.

Der weitere Fußbodenaufbau oberhalb der tragenden Schicht 13 richtet sich nach den Gegebenheiten des Einzelfalles bzw. den Wünschen des Bauherrn. Eine Integration einer Fussbodenheizung ist möglich, auch deas Verlegen von Elektrokabeln oder sonstigen Rohren und Leitungen.

Ist die tragende Schicht 13 ausgehärtet, können die unterseitigen Bau-Stützen 4 entfernt werden. Ist dies geschehen, erhält man eine glatte Deckenunterseite. Es sollten lediglich noch die Stoßkanten zwischen den Trockenbauplatten mit Klebebändern überklebt und damit verschlossen werden; sodann kann die Unterseite tapeziert oder unmittelbar gestrichen werden.

In der Zeichnung ist eine Verkleidung 6 unterhalb des plattenförmigen Deckenelements 2 wiedergegeben. Die Verkleidung kann natürlich wie in der Zeichnung zuvor auf die Unterseite des plattenförmigen Deckenelements appliziert werden, ggf. auch in liegender Bauweise, wobei also das plattenförmige Deckenelement 2 mit seiner Unterseite nach oben auf dem Boden 14 des betreffenden Raums ruht oder auf einer anderen ebenen Unterlage, so dass die Profilbrtter 6 an dem plattenförmigen Deckenelement verlegt werden können wie dies bei dem Verlegen von Fussbodenbrettern üblich ist.

Natürlich kann das Verkleiden der Decke 1 auch erst nach Fertigstellen derselben erfolgen.

Schließlich ist noch darauf zu achten, dass aus statischen Gründen die tragende Schicht 10 unmittelbar auf den Wänden 3 aufsitzen soll, damit Gewichtskräfte vollständig in die Wände 3 eingeleitet werden. Hierzu sind die plattenförmigen Deckenelemente möglichst auf einer Höhe an den Wänden 3 zu fixieren, dass die Oberkante des Deckenaufbaus zwischen dem plattenförmigen Deckenelement 2 und der tragenden Schicht 13 möglichst exakt der Oberkante der angrenzenden Wände 3 entspricht, so dass die vor Ort betonierte, tragende Deckenplatte 10 möglichst ohne Versatz unmittelbar auf den Wänden 3 aufsitzt. Im Fall einer Deckenheizung oder bei Installationen 8 unterhalb der tragenden Deckenplatte 10 oder bei einer Wärmedämmung 7, 9 zwischen dem plattenförmigen Deckenelemennt 2 und der tragenden Deckenplatte 10 sind daher die plattenförmigen Deckenelemente 2 um ein entsprechendes Maß gegenüber der Oberkante der Wände 3 nach unten versetzt an jenen zu fixieren.

Die erfindungsgemäße Konstruktion hat u.a. den Vorteil, dass unterhalb der tragenden Deckenplatte 10 Installationen mannigfaltiger Art vorgenommen werden können, insbesondere auch in Form einer Deckenheizung, die mit wenig Aufwand montiert werden können und später zu Wartungs- und Reparaturzwecken durch Abschrauben des plattenförmigen Deckenelements 2 grundsätzlich zugänglich sind, im Gegensatz bspw. zu einer herkömmlichen Fußbodenheizung, deren Heizsschlangen ohne Zerstörung des Estrichs im Allgemeinen nicht mehr zugänglich sind.

### Bezugszeichenliste

- 1: Decke
- 2: plattenförmig. Deckenelement
- 3: Wand
- 4: Stützelement
- 5: Horizontalbalken
- 6: Verkleidungsplatte
- 7: Dämmschicht
- 8: Heizschlange
- 9: Dämmschicht
- 10: tragende Schicht
- 11: Schraube
- 12: freies Schaftende
- 13: aushärtbare Masse
- 14: Boden

## Patentansprüche

1. Verfahren zur Herstellung einer Decke (1) in einem Gebäude, umfassend folgende Schritte:
a) ein plattenförmiges Deckenelement (2), welches später im Bauwerk verbleibt, vorzugsweise als Deckenverkleidung oder als deren Halterung, insbesondere eine Trockenbauplatte, wird an den bereits fertiggestellten Wänden (3) fixiert;
b) das plattenförmige Deckenelement (2) wird in engen Abständen abgestützt, ggf. mittels auf Stützelementen (4) abgestützter Horizontalbalken (5);
c) auf dem plattenförmigen Deckenelement (2) wird ggf. eine Dämmung (7,9) verlegt und/oder Heizschlangen (8) und/oder eine Elektroinstallation;
d) darauf wird eine aushärtbare Masse (13) eingefüllt, beispielsweise Beton oder Spannbeton und/oder Estrich oder Heizestrich od. dgl., vorzugsweise derart, dass sich die aushärtende Masse (13) zumindest teilweise auch über die angrenzenden Wände (3) erstreckt;
e) wobei das plattenförmige Deckenelement (2) von einer Vielzahl von langgestreckten Verankerungsteilen (11) durchdrungen wird, welche sich von dem Deckenelement (2) nach oben erstrecken bis in die aushärtbare Masse (13) hinein und nach dem Verfestigen der aushärtbaren Masse (13) darin formschlüssig festgehalten werden;
f) wobei die langgestreckten Verankerungsteile (11) die Gestalt von Schrauben haben, deren freie Schaftenden (12) während der Montage nach oben ragen;
g) nach Aushärten der aushärtbaren Masse (13) zu einer tragenden Schicht (10) werden die Stützelemente (4) entfernt, während die langgestreckten Verankerungsteile (11) im Bauwerk verbleiben und das plattenförmige Deckenelement (2) an Ort und Stelle halten.

2. Verfahren nach Anspruch 1, **dadurch gekennzeichnet, dass** das plattenförmige Deckenelement (2) derart justiert wird, dass seine Oberseite oder die Oberseite der obersten darauf liegenden Dämmung (7,9), Heizschlangen (8) und/oder Elektroinstallation, in einer gemeinsamen Flucht bzw. Horizontalebene mit den Oberseiten der angrenzenden Wände (3) ist.

3. Verfahren nach Anspruch 1 oder 2, **dadurch gekennzeichnet, dass** das plattenförmige Deckenelement (2) aus Holz besteht, beispielsweise aus einer Holzplatte, einer Sperrholzplatte, einer Spanplatte, einer Leimholzplatte, einer mitteldichten Faserplatte oder einer Grobspanplatte, vorzugsweise jedoch aus einer mittelharten Faserplatte oder einer Hartfaserplatte.

4. Verfahren nach einem der vorhergehenden Ansprüche, **dadurch gekennzeichnet, dass** die Verankerungsteile (11) nach dem Verfestigen der aushärtbaren Masse (13) darin lösbar festgehalten werden, insbesondere in Gestalt von Schrauben, welche durch Drehbewegungen aus der zu einer tragenden Schicht (10) verfestigten Masse (13) herausgeschraubt werden können.

5. Verfahren nach einem der vorhergehenden Ansprüche, **dadurch gekennzeichnet, dass** die Verankerungsteile (11) eine Beschichtung aufweisen, welche ein Festkleben an der ausgehärteten Masse (13) verhindert, beispielsweise ein dünn aufgetragenes Öl.

6. Verfahren nach einem der vorhergehenden Ansprüche, **dadurch gekennzeichnet, dass** die aushärtbare Masse (13) armiert ist, insbesondere durch eingelegte Eisen- oder Stahlmatten oder -käfige.

7. Verfahren nach einem der vorhergehenden Ansprüche, **dadurch gekennzeichnet, dass** die aushärtbare Masse (13) auch auf die Oberseiten der benachbarten Wände (3) aufgetragen wird.

8. Verfahren nach einem der vorhergehenden Ansprüche, **dadurch gekennzeichnet, dass** nach dem Entfernen der Stützelemente (4) durch Verankerung in dem plattenförmigen Deckenelement (2) eine Deckenverkleidung (6) montiert werden kann, beispielsweise eine Holzdecke aus Profilbrettern.

## Claims

1. Method for producing a ceiling (1) in a building, comprising the following steps:
a) a plate-shaped ceiling element (2), which later remains in the structure, preferably in the form of a ceiling cladding or as a mounting for the ceiling cladding, in particular a dry building panel, is fixed on the already completed walls (3);
b) the plate-shaped ceiling element (2) is supported in a closely spaced manner, optionally by means of horizontal bars (5) supported on support elements (4);
c) optionally, an insulation (7, 9) and/or heating coils (8) and/or an electric installation is placed on the plate-shaped ceiling element (2);
d) a curable compound (13), for example concrete or prestressed concrete and/or a screed or heating screed or the like, is filled thereon, preferably in such a way that the curing compound (13) also extends at least partially above the adjoining walls (3);
e) wherein the plate-shaped ceiling element (2) is penetrated by a plurality of elongated anchoring parts (11), which extend upward from the ceiling element (2) into the curable compound (13) and, after the solidification of the curable compound (13), are positively fixed therein,
f) wherein the elongated anchoring parts (11) are in the shape of screws, whose shaft ends (12) protrude upward during the assembly;
g) the support elements (4) are removed after the curable (13) compound has been cured to form a supporting layer (10), while the elongated anchoring parts (11) remain in the structure and hold the plate-shaped ceiling element (2) in place.

2. Method according to claim 1, **characterized in that** the plate-shaped ceiling element (12) is aligned such that its upper side or the upper side of the uppermost insulation (7,9), of heating coils (8) and/or of an electric installation located thereon is in a common alignment or, respectively, in a common horizontal plane with the upper sides of the adjoining walls (3).

3. Method according to claim 1 or 2, **characterized in that** the plate-shaped ceiling element (2) consists of wood, for example of a wooden plate, or of a plywood plate, or of a particleboard plate, or of a laminated wood plate, or of a medium-density fiberboard plate, or of an oriented strand board plate, but preferably of a medium hardness fiberboard plate or of a hard fiberboard plate.

4. Method according to one of the preceding claims, **characterized in that**, after the solidification of the curable compound (13), the anchoring parts (11) are detachably fixed therein, in particular in the form of screws, which can be unscrewed from the compound (13) solidified to form a supporting layer (10) by rotational movements.

5. Method according to one of the preceding claims, **characterized in that** the anchoring parts (11) have a coating which prevents sticking to the cured compound (13), for example, a thinly applied oil.

6. Method according to one of the preceding claims, **characterized in that** the curable compound (13) is reinforced, in particular by inlaid iron or steel mats or cages.

7. Method according to one of the preceding claims, **characterized in that** the curable compound (13) is applied onto the upper sides of the adjoining walls (3), too.

8. Method according to one of the preceding claims, **characterized in that**, after the removal of the support elements (4), a ceiling cladding (6) can be mounted by anchoring in the plate-shaped ceiling element (2), for example, a wooden ceiling made of profiled boards.

## Revendications

1. Procédé de fabrication d'un plafond (1) dans un bâtiment, comprenant les étapes suivantes :
a) un élément de plafond en forme de plaque (2) appelé à rester dans la construction, de préférence en tant que revêtement de plafond ou en tant que son support, en particulier un panneau de construction sèche, est fixé aux murs (3) déjà réalisés ;
b) l'élément de plafond en forme de plaque (2) est soutenu à intervalles rapprochés, le cas échéant au moyen de poutres horizontales (5) en appui sur des éléments de support (4) ;
c) une isolation (7, 9) est éventuellement posée sur l'élément de plafond en forme de plaque (2) et/ou des serpentins chauffants (8) et/ou une installation électrique ;
d) une substance durcissable (13) est remplie, par exemple du béton ou du béton précontraint et/ou une chape ou une chape chauffante ou similaire, de préférence de telle manière que la substance durcissable (13) s'étend au moins en partie également au-delà des murs (3) contigus ;
e) en ce que l'élément de plafond en forme de plaque (2) est percé par une pluralité de pièces d'ancrage (11) allongées lesquelles s'étendent de l'élément de plafond (2) vers le haut jusque dans la substance durcissable (13) et après durcissement de la substance durcissable (13) y sont retenues solidairement ;
f) en ce que les pièces d'ancrage (11) allongées ont la forme de vis dont les extrémités libres de tige (12) font saillie vers le haut pendant le montage ;
g) les éléments de support (4) sont enlevés après durcissement de la substance durcissable (13) en une couche portante (10) tandis que les pièces d'ancrage (11) allongées restent dans la construction et maintiennent en place l'élément de plafond en forme de plaque (2).

2. Procédé selon la revendication 1, **caractérisé en ce que** l'élément de plafond en forme de plaque (2) est ajusté de sorte que sa face supérieure ou la face supérieure de l'isolation supérieure (7, 9) qui y est appliquée, des serpentins chauffants (8) et/ou de l'installation électrique, est dans un alignement commun ou un plan horizontal avec les faces supérieures des murs contigus (3).

3. Procédé selon la revendication 1 ou 2, **caractérisé en ce que** l'élément de plafond en forme de plaque (2) est constitué de bois, par exemple d'un panneau de bois, d'un panneau de contreplaqué, d'un panneau de particules, d'un panneau lamellé-collé, d'un panneau de fibres à densité moyenne ou d'un panneau en aggloméré, de préférence toutefois d'un panneau de fibres mi-dur ou d'un panneau de fibres dur.

4. Procédé selon l'une des revendications précédentes, **caractérisé en ce que** les pièces d'ancrage (11) après durcissement de la substance durcissable (13) y sont maintenues de façon désolidarisable, en particulier sous forme de vis lesquelles peuvent être dévissées par des mouvements de rotation de la substance (13) durcie en une couche portante (10).

5. Procédé selon l'une des revendications précédentes, **caractérisé en ce que** les pièces d'ancrage (11) comportent un revêtement qui empêche une adhérence à la substance durcie (13), par exemple une huile appliquée en couche fine.

6. Procédé selon l'une des revendications précédentes, **caractérisé en ce que** la substance durcissable (13) est armée, en particulier par des treillis ou cages de fer ou d'acier.

7. Procédé selon l'une des revendications précédentes, **caractérisé en ce que** la substance durcissable (13) est également appliquée sur les faces supérieures des murs (3) contigus.

8. Procédé selon l'une des revendications précédentes, **caractérisé en ce qu'**un habillage de plafond (6) peut être monté, par exemple un plafond en bois en planches profilées, par ancrage dans l'élément de plafond en forme de plaque (2) après le retrait - des éléments de support (4).
